# EUROPEAN PATENT APPLICATION

(11) **EP 4 408 119 A1**
(43) Date of publication of application: **31.07.2024**
(21) Application number: 22887631.4
(22) Date of filing: 27.10.2022
(51) Int. Cl.: H04W 76/25, H04W 76/27, H04W 76/16, H04L 69/24, H04W 8/24, H04W 88/06

(54) **METHOD AND APPARATUS FOR NEGOTIATING USER EQUIPMENT CAPABILITY OF USER EQUIPMENT HAVING PLURALITY OF USIMS IN NEXT-GENERATION MOBILE COMMUNICATION SYSTEM**

(30) Priority: 28.10.2021 KR 20210145957
(71) Applicant: Samsung Electronics Co., Ltd., Suwon-si, Gyeonggi-do 16677 (KR)
(72) Inventor: JIN, Seungri, Suwon-si, Gyeonggi-do 16677 (KR); JUNG, Sangyeob, Suwon-si, Gyeonggi-do 16677 (KR)
(74) Representative: Gulde & Partner
(86) International application number: PCT/KR2022/016537
(87) International publication number: WO 2023/075436

(57) **Abstract**

The present disclosure relates to a 5G or 6G communication system for supporting a higher data transmission rate. According to various embodiments of the present disclosure, user equipment, which supports a plurality of USIMs, may be supported so as to also perform an operation related to dual connectivity configured in one network while maintaining RRC connection establishment with two networks.

## Description

### [Technical Field]

The disclosure relates to the operations of a user equipment and base station in mobile communication systems. More specifically, the disclosure relates to a method and apparatus for negotiating UE capability of a user equipment (e.g., Multi-USIM UE) supporting a plurality of universal subscriber identity modules (USIMs).

### [Background Art]

5G mobile communication technologies define broad frequency bands such that high transmission rates and new services are possible, and can be implemented not only in "Sub 6 GHz" bands such as 3.5 GHz, but also in "Above 6 GHz" bands referred to as millimeter wave (mmWave) including 28 GHz, 39 GHz, and the like. In addition, it has been considered to implement 6G mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of band-width part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, new radio (NR) user equipment (UE) power saving, non-terrestrial network (NTN) which is UE-satellite direct communication for securing coverage in an area in which communication with terrestrial networks is unavailable, and positioning.

Moreover, there has been ongoing standardization in air interface architecture/protocol regarding technologies such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, drone communication, and the like.

Furthermore, such development of 5G mobile communication systems will serve as a basis for developing not only new waveforms for securing coverage in terahertz bands of 6G mobile communication technologies, multi-antenna transmission technologies such as full dimensional MIMO (FD-MIMO), array antennas and largescale antennas, metamaterial-based lenses and antennas for improving coverage of terahertz band signals, high-dimensional space multiplexing technology using orbital angular momentum (OAM), and reconfigurable intelligent surface (RIS), but also fullduplex technology for increasing frequency efficiency of 6G mobile communication technologies and improving system networks, satellite, AI-based communication technology for implementing system optimization by utilizing artificial intelligence (AI) from the design stage and internalizing end-to-end AI support functions, next-generation distributed computing technology for implementing services at levels of complexity exceeding the limit of UE operation capability by utilizing ultra-high-performance communication and computing resources, and the like.

### [Disclosure of Invention]

### [Technical Problem]

In case where a terminal supporting multiple USIMs performs an operation related to dual connectivity configured to one network while maintaining RRC connection configuration with two networks, a method for accurately delivering a corresponding UE capability to each network needs to be devised.

### [Solution to Problem]

In order to solve the above problem, the disclosure provides a method of a terminal including a first USIM and a second USIM, comprising transmitting a UE capability information message including information on whether to support multi universal subscriber identify module (MUSIM) operation to a first base station; receiving, from the first base station, a radio resource control (RRC) message including information on whether the first base station supports the MUSIM operation, based on the UE capability information message; receiving a paging message from a second base station; and performing the MUSIM operation based on the paging message, wherein in the MUSIM operation, the first USIM maintains dual connectivity (DC) or carrier aggregation (CA) connection with the first base station, while the second USIM performs an RRC connection with the second base station.

In order to solve the above problem, the disclosure provides a method of a first base station supporting multi universal subscribe identify module (MUSIM) operation in a wireless communication system, comprising receiving, from a terminal, a UE capability information message including information on whether to support the MUSIM operation of the terminal; generating a radio resource control (RRC) message including information on whether the first base station supports the MUSIM operation, based on the UE capability information message; and transmitting the RRC message, wherein the terminal includes a first USIM and a second USIM, and in the MUSIM operation, the first USIM maintains dual connectivity (DC) or carrier aggregation (CA) connection with the first base station, while the second USIM performs an RRC connection with a second base station.

In order to solve the above problem, the disclosure provides a terminal comprising a first USIM and a second USIM, comprising a transceiver that transmits and receives a signal; and a controller, wherein the controller controls to transmit a UE capability information message including information on whether to support multi universal subscriber identify module (MUSIM) operation to a first base station, receive, from the first base station, a radio resource control (RRC) message including information on whether the first base station supports the MUSIM operation, based on the UE capability information message, receive a paging message from a second base station, and perform the MUSIM operation based on the paging message, and wherein in the MUSIM operation, the first USIM maintains dual connectivity (DC) or carrier aggregation (CA) connection with the first base station, while the second USIM performs an RRC connection with the second base station.

In order to solve the above problem, the disclosure provides a first base station supporting multi universal subscribe identify module (MUSIM) operation in a wireless communication system, comprising a transceiver that transmits and receives a signal; and a controller, wherein the controller controls to receive, from a terminal, a UE capability information message including information on whether to support the MUSIM operation of the terminal, generate a radio resource control (RRC) message including information on whether the first base station supports the MUSIM operation, based on the UE capability information message, and transmit the RRC message, wherein the terminal includes a first USIM and a second USIM, and in the MUSIM operation, the first USIM maintains dual connectivity (DC) or carrier aggregation (CA) connection with the first base station, while the second USIM performs an RRC connection with a second base station.

### [Advantageous Effects of Invention]

According to the UE capability deliver and negotiation method proposed through various embodiments of the disclosure, a terminal, which supports a plurality of USIMs, may perform operations related to dual connectivity configured in one network while maintaining RRC connection configuration with two networks.

### [Brief Description of Drawings]

FIG. 1 is a diagram illustrating a structure of a long term evolution (LTE) system to which the disclosure is applicable.
FIG. 2 is a diagram illustrating a radio protocol structure in an LTE system to which the disclosure is applicable.
FIG. 3 is a diagram illustrating a structure of a next-generation mobile communication system to which the disclosure is applicable.
FIG. 4 is a diagram illustrating a radio protocol structure of a next-generation mobile communication system to which the disclosure is applicable.
FIG. 5 is a diagram illustrating a message structure for reporting of UE capability in a new radio (NR) system to which the disclosure is applicable.
FIG. 6 is a diagram illustrating an operation in which a UE supporting a plurality of universal subscriber identity module (USIMs) (for example, Multi-USIM UE) performs operations associated with other USIMs while maintaining an RRC connected mode (RRC_CONNECTED) with a base station associated with one USIM according to an embodiment of the disclosure.
FIG. 7A is a diagram illustrating Method 1 in which a UE supporting MUSIM supports dual connectivity (DC) and carrier aggregation (CA) while maintaining two RRC connected states, as Embodiment 1 proposed in the disclosure.
FIG. 7B is a diagram illustrating Method 1 in which a UE supporting MUSIM supports dual connectivity (DC) and carrier aggregation (CA) while maintaining two RRC connected states, as Embodiment 1 proposed in the disclosure.
FIG. 8A is a diagram illustrating Method 2 in which a UE supporting MUSIM supports DC and CA while maintaining two RRC connected states, as Embodiment 2 proposed in the disclosure.
FIG. 8B is a diagram illustrating Method 2 in which a UE supporting MUSIM supports DC and CA while maintaining two RRC connected states, as Embodiment 2 proposed in the disclosure.
FIG. 9A is a diagram illustrating an overall operation of a USIM 1 UE supporting MUSIM to request a temporary change in UE capability proposed in the disclosure.
FIG. 9B is a diagram illustrating an overall operation of a USIM 1 UE supporting MUSIM to request a temporary change in UE capability proposed in the disclosure.
FIG. 10 is a diagram illustrating an overall operation in which an USIM2 UE in an idle or inactive state performs an MUSIM operation, proposed in the disclosure.
FIG. 11A is a diagram illustrating an overall operation of a base station that receives a temporary change in UE capability, proposed in the disclosure.
FIG. 11B is a diagram illustrating an overall operation of a base station that receives a temporary change in UE capability, proposed in the disclosure.
FIG. 12 is a diagram illustrating a block constitution of a UE according to an embodiment of the disclosure.
FIG. 13 is a diagram illustrating a block constitution of a base station according to an embodiment of the disclosure.

### [Mode for the Invention]

Hereinafter, the operating principle of the disclosure will be described in detail with reference to the accompanying drawings. In the following description of the disclosure, when it is determined that a detailed description of a related known function or constitution may unnecessarily obscure the subject matter of the disclosure, the detailed description thereof will be omitted. In addition, terms to be described later are terms defined in consideration of functions in the disclosure and may vary according to the intention or practices of users or operators. Therefore, the definition should be made based on the contents throughout this specification. Terms for identifying access nodes, terms with reference to network entities, terms with reference to messages, terms with reference to an interface between network objects, and terms with reference to various types of identification information, which are used in the following description, and the like are illustrated for convenience of description. Accordingly, the disclosure is not limited to terms to be described later, and other terms with reference to objects having an equivalent technical meaning may be used.

In the following description, the disclosure will be described using terms and names defined in the 3rd generation partnership project long term evolution (3GPP LTE) standards for the convenience of description. However, the disclosure is not limited by these terms and names, and may be applied in the same way to systems that conform other standards.

For example, in the disclosure, a dual connectivity (DC) operation may mean that a master node (MN) and secondary node (SN) are simultaneously configured and an RRC connection is established, and data is transmitted and received through the two nodes.

For example, in the disclosure, a carrier aggregation (CA) operation may mean performing data transmission and reception using a primary cell (PCell) and one or more secondary cells (SCells).

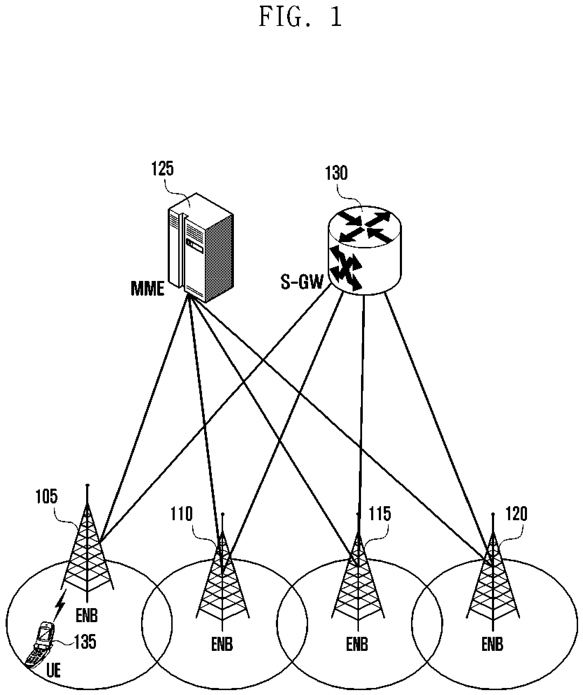

FIG. 1 is a diagram illustrating a structure of a long term evolution (LTE) system to which the disclosure is applicable.

With reference to FIG. 1, as illustrated, a radio access network of an LTE system includes next-generation base stations (evolved Node B, hereinafter, eNB, Node B, or base station) 105, 110, 115, 120, a mobility management entity (MME) 125, and a serving-gateway (S-GW) 130. A user terminal (user equipment, hereinafter, UE or terminal) 135 accesses an external network via the eNBs 105 to 120 and the S-GW 130.

In FIG. 1, the eNBs 105 to 120 correspond to existing Node Bs of an UMTS system. The eNBs are connected to the UE 135 via a radio channel and perform more complex roles compared to the existing Node Bs. In the LTE system, because all user traffic including a real-time service, such as Voice over IP (VoIP) over the Internet protocol, is serviced via a shared channel, an entity, which collects state information, such as buffer states, available transmission power states, and channel states of the UEs, so as to perform scheduling, is required, and the eNBs 105 to 120 take on the role of the entity. A single eNB typically controls multiple cells. For example, in order to implement a transmission rate of 100 Mbps, the LTE system uses, for example, orthogonal frequency division multiplexing (hereinafter, referred to as OFDM) as a radio access technology in a 20 MHz bandwidth. In addition, an adaptive modulation & coding (hereinafter, referred to as AMC) scheme of determining a modulation scheme and channel coding rate according to a channel state of the UE is applied. The S-GW 130 is an entity to provide a data bearer, and generates or removes a data bearer under control of the MME 125. The MME is an entity in charge of various control functions as well as a mobility management function for the UE, and is connected to multiple base stations.

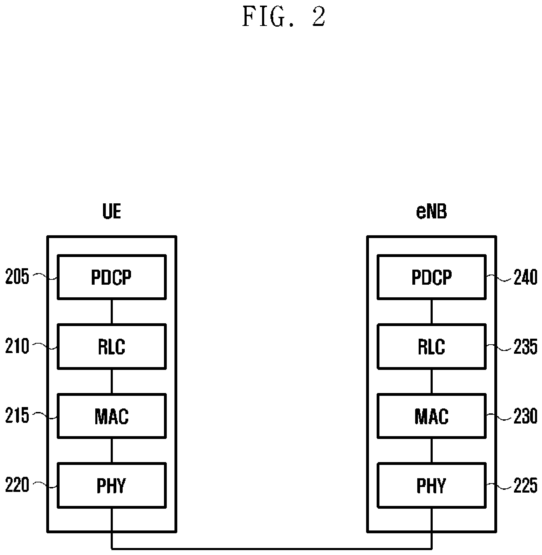

FIG. 2 is a diagram illustrating a radio protocol structure in the LTE system to which the disclosure is applicable.

With reference to FIG. 2, a radio protocol of the LTE system includes packet data convergence protocols (PDCPs) 205, 240, radio link controls (RLCs) 210, 235, and medium access controls (MACs) 215, 230, in a UE and an eNB, respectively. The PDCPs 205, 240 are in charge of operations, such as IP header compression/restoration, and the like. Main functions of the PDCPs are summarized as follows.
- Header compression and decompression function (Header compression and decompression: ROHC only)
- User data transfer function (Transfer of user data)
- In-sequence delivery function (In-sequence delivery of upper layer PDUs at PDCP re-establishment procedure for RLC AM)
- Reordering function (For split bearers in DC(only support for RLC AM): PDCP PDU routing for transmission and PDCP PDU reordering for reception)
- Duplicate detection function (Duplicate detection of lower layer SDUs at PDCP re-establishment procedure for RLC AM)
- Retransmission function (Retransmission of PDCP SDUs at handover and, for split bearers in DC, of PDCP PDUs at PDCP data-recovery procedure, for RLC AM)
- Encryption and decryption function (Ciphering and deciphering)
- Timer-based SDU discard function (Timer-based SDU discard in uplink.)

Radio link controls (hereinafter, referred to as RLCs) 210, 235 reconstitute a PDCP packet data unit (PDU) to an appropriate size to perform ARQ operation and the like. Main functions of the RLCs are summarized as follows.
- Data transfer function (Transfer of upper layer PDUs)
- ARQ function (Error Correction through ARQ(only for AM data transfer))
- Concatenation, segmentation and reassembly function (Concatenation, segmentation and reassembly of RLC SDUs(only for UM and AM data transfer))
- Re-segmentation function (Re-segmentation of RLC data PDUs(only for AM data transfer))
- Reordering function (Reordering of RLC data PDUs(only for UM and AM data transfer)
- Duplicate detection function (Duplicate detection(only for UM and AM data transfer))
- Error detection function (Protocol error detection(only for AM data transfer))
- RLC SDU discard function (RLC SDU discard(only for UM and AM data transfer))
- RLC re-establishment function (RLC re-establishment)

MACs 215, 230 are connected to multiple RLC layer entities constituted in one UE, perform an operation of multiplexing RLC PDUs to MAC PDUs, and demultiplexing RLC PDUs from MAC PDUs. Main functions of the MACs are summarized as follows.
- Mapping function (Mapping between logical channels and transport channels)
- Multiplexing and demultiplexing function (Multiplexing/demultiplexing of MAC SDUs belonging to one or different logical channels into/from transport blocks(TB) delivered to/from the physical layer on transport channels)
- Scheduling information reporting function (Scheduling information reporting)
- HARQ function (Error correction through HARQ)
- Function of priority handling between logical channels (Priority handling between logical channels of one UE)
- Function of priority handling between UEs (Priority handling between UEs by means of dynamic scheduling)
- MBMS service identification function (MBMS service identification)
- Transport format selection function (Transport format selection)
- Padding function (Padding)

Physical layers 220, 225 perform channel-coding and modulation of upper layer data, make the channel-coded and modulated upper layer data into OFDM symbols, and transmit the OFDM symbols via a radio channel, or the physical layers 220, 225 perform demodulation and channel-decoding of the OFDM symbols received through the radio channel, and transfer the same to an upper layer. In addition, in the physical layer, Hybrid ARQ (HARQ) is used to correct any additional error. A reception end transmits whether to receive the packet transmitted from a transmission end in 1 bit. This is HARQ ACK/NACK information. Downlink HARQ ACK/NACK information for the uplink transmission is transmitted via a physical channel of physical hybrid-ARQ indicator channel (PHICH), and uplink HARQ ACK/NACK information for the downlink transmission may be transmitted via a physical channel of physical uplink control channel (PUCCH) or physical uplink shared channel (PUSCH).

Meanwhile, the PHY layer may include one frequency/carrier or a plurality of frequencies/carriers, and a technology to configure and use the plurality of frequencies simultaneously is called carrier aggregation (hereinafter referred to as "CA"). Unlike using only one carrier for communication between the terminal (or user terminal (UE)) and the base station (E-UTRAN NodeB, eNB), the CA technology additionally uses a main carrier and one or a plurality of subcarriers to be able to surprisingly increase throughput as many as the number of subcarriers. Meanwhile, in the LTE, a cell within the base station using the main carrier is called a primary cell (PCell) and the subcarrier is called a secondary cell (SCell).

Although not illustrated in the drawings, a radio resource control (RRC) layer is present in upper PDCP layers of the UE and base station respectively. The RRC layer can make a connection for wireless resource control and exchange configuration control messages associated with measurement.

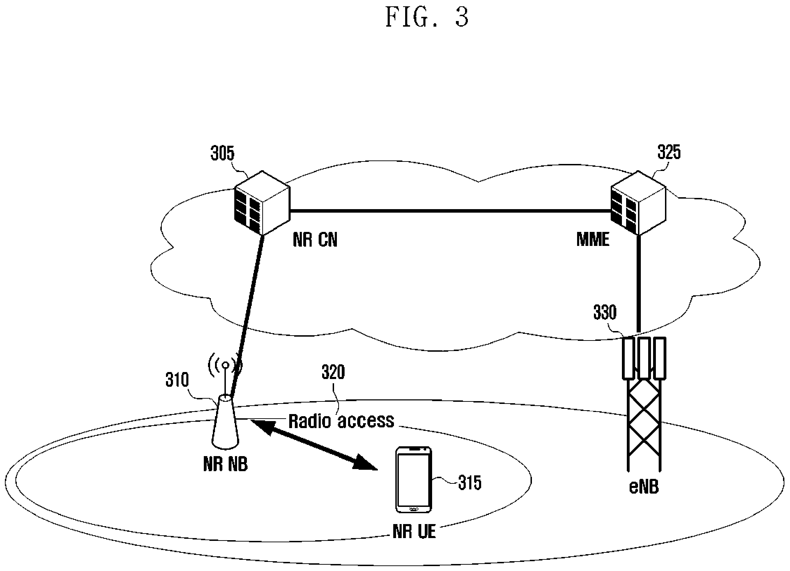

FIG. 3 is a diagram illustrating a structure of a next-generation mobile communication system to which the disclosure is applicable.

With reference to FIG. 3, as illustrated, a radio access network of the next generation mobile communication system includes a next generation base station (new radio Node B, hereinafter, NR NB) 310 and a new radio core network (NR CN or next generation core network (NG CN)) 305. A user terminal (new radio user equipment, hereinafter, NR UE or terminal) 315 accesses an external network via the NR NB 310 and NR CN 305. Herein, the NR CN 305 may be used interchangeably with 5G core network (5G CN) or 5G core (5GC).

With reference to FIG. 3, the NRNB 310 corresponds to an evolved node B (eNB) of an existing LTE system. The NR NB is connected to the NR UE 315 via a radio channel, and may provide a more superior service compared to an existing node B. In the next generation mobile communication system, because all user traffic is serviced via a shared channel, an entity, which collects state information, such as buffer states, available transmission power states, and channel states of the UEs, so as to perform scheduling, is required, and the NR NB 310 takes on the role of the entity. A single NR NB typically controls multiple cells. In order to implement ultra-high-speed data transmission compared to the existing LTE, an existing maximum bandwidth or more may be available, and, by using orthogonal frequency division multiplexing (hereinafter, referred to as OFDM) as a radio access technology, beamforming technology may be additionally combined. Also, a plurality of SCSs may be supported simultaneously by one system. It is also possible for the control signal and data signal to have different SCSs. Also, an adaptive modulation & coding (hereinafter, referred to as AMC) scheme of determining a modulation scheme and channel coding rate according to a channel state of a UE is applied. Additionally, one system uses a method of managing a plurality of BWPs. The NR CN 305 performs functions, such as mobility support, bearer configuration, and QoS configuration. The NR CN is an entity in charge of various control functions as well as a mobility management function for a UE, and is connected to multiple base stations. Also, the next generation mobile communication system may be linked to an existing LTE system, and the NR CN is connected to the MME 325 via a network interface. The MME is connected to the eNB 330 that is an existing base station.

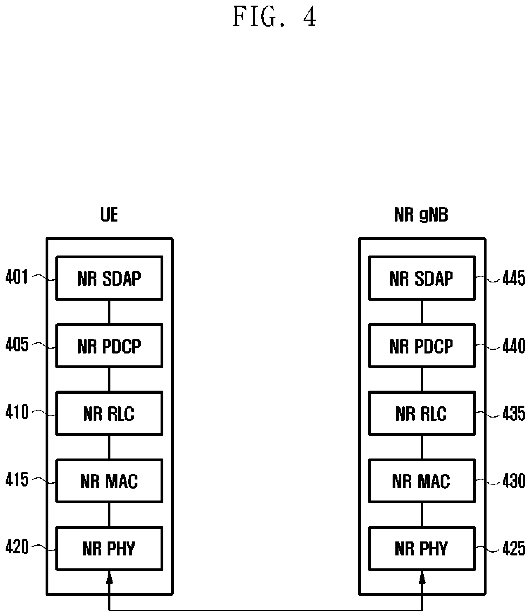

FIG. 4 is a diagram illustrating a radio protocol structure of a next-generation mobile communication system to which the disclosure is applicable.

With reference to FIG. 4, a radio protocol of the next generation mobile communication system includes NR service data adaption protocols (SDAPs) 401, 445, NR PDCPs 405, 440, NR RLCs 410, 435, and NR MACs 415, 430 in a UE and an NR base station, respectively.

Main functions of the NR SDAPs 401, 445 may include some of the following functions.
- User data transfer function (transfer of user plane data)
- Function of mapping QoS flow and data bearer for uplink and downlink (mapping between a QoS flow and a DRB for both DL and UL)
- Function of marking QoS flow ID in uplink and downlink (marking QoS flow ID in both DL and UL packets)
- Function of mapping reflective QoS flow to data bearer for uplink SDAP PDUs (reflective QoS flow to DRB mapping for the UL SDAP PDUs).

With respect to the SDAP layer entity, the UE may be configured, via an RRC message, whether to use a header of the SDAP layer entity or whether to use a function of the SDAP layer entity for each PDCP layer entity, for each bearer, or for each logical channel, and in case where the SDAP header is configured, the UE may indicate to update or reconfigure mapping information for data bearers and QoS flows in uplink and downlink, by a NAS QoS reflection configuration 1 bit indicator (NAS reflective QoS) and an AS QoS reflection configuration 1 bit indicator (AS reflective QoS) in the SDAP header. The SDAP header may include QoS flow ID information indicating QoS. The QoS information may be used as a data processing priority, scheduling information, etc. to support a smooth service.

Main functions of the NR PDCPs 405, 440 may include some of the following functions.
- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink.)

The reordering function of an NR PDCP entity refers to a function of rearranging PDCP PDUs, which are received in a lower layer, in order based on PDCP sequence numbers (SN), where the reordering function may include a function of delivering data to an upper layer in the rearranged order or may include a function of directly delivering data without considering the order, may include a function of rearranging the order and recording lost PDCP PDUs, may include a function of reporting states of the lost PDCP PDUs to a transmission side, and may include a function of requesting to retransmit the lost PDCP PDUs.

Main functions of the NR RLCs 410, 435 may include some of the following functions.
- Data transfer function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error Correction through ARQ)
- Concatenation, segmentation and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

In the above, the in-sequence delivery function of an NR RLC entity refers to a function of delivering RLC SDUs, which are received from a lower layer, to an upper layer in order. The in-sequence delivery function may include a function of, in case where originally one RLC SDU is divided into multiple RLC SDUs and then received, reassembling the divided RLC SDUs and delivering the same, may include a function of rearranging the received RLC PDUs on the basis of RLC sequence numbers (SNs) or PDCP sequence numbers (SNs), may include a function of rearranging the order and recording lost RLC PDUs, may include a function of reporting states of the lost RLC PDUs to a transmission side, may include a function of requesting to retransmit the lost RLC PDUs, and may include a function of, in case where there is a lost RLC SDU, delivering only RLC SDUs before the lost RLC SDU to an upper layer in order. Alternatively, the in-sequence delivery function may include a function of, although there is a lost RLC SDU, if a predetermined timer has been expired, delivering all RLC SDUs received before starting of the timer to an upper layer in order, or may include a function of, although there is a lost RLC SDU, if a predetermined timer has been expired, delivering all RLC SDUs received up to the present time to an upper layer in order. In addition, the RLC PDUs may be processed in the order of reception thereof (in order of arrival regardless of the order of the sequence numbers or serial numbers) and may be delivered to a PDCP entity regardless of the order (out-of-sequence delivery). In the case of segments, segments stored in a buffer or to be received at a later time may be received, reconstituted into one complete RLC PDU, processed, and then may be delivered to the PDCP entity. The NR RLC layer may not include a concatenation function, and the function may be performed in an NR MAC layer or may be replaced with a multiplexing function of the NR MAC layer.

The out-of-sequence delivery function of the NR RLC entity refers to a function of delivering RLC SDUs received from a lower layer to an immediate upper layer in any order, may include a function of, in case where originally one RLC SDU is divided into multiple RLC SDUs and then received, reassembling the divided RLC SDUs and delivering the same, and may include a function of storing RLC SNs or PDCP SNs of the received RLC PDUs, arranging the order thereof, and recording lost RLC PDUs.

The NR MACs 415, 430 may be connected to multiple NR RLC layer entities constituted for one UE, and main functions of the NR MACs may include some of the following functions.
- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Function of priority handling between logical channels (Priority handling between logical channels of one UE)
- Function of priority handling between UEs (Priority handling between UEs by means of dynamic scheduling)
- MBMS service identification function (MBMS service identification)
- Transport format selection function (Transport format selection)
- Padding function (Padding)

NR PHY layers 420, 425 may perform channel-coding and modulation of upper layer data, make the channel-coded and modulated upper layer data into OFDM symbols, and transmit the OFDM symbols via a radio channel, or the NR PHY layers 420, 425 may perform demodulation and channel-decoding of the OFDM symbols received through the radio channel, and transfer the same to the upper layer.

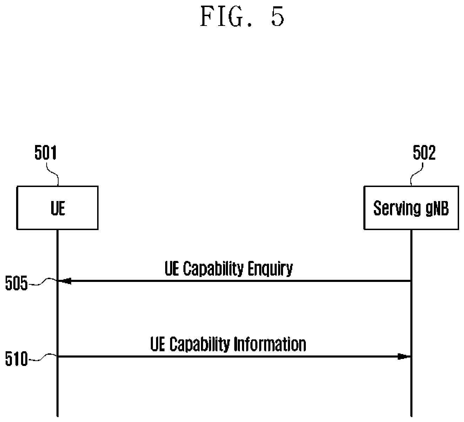

FIG. 5 is a diagram illustrating a message structure for reporting of UE capability in a new radio (NR) system to which the disclosure is applicable. Basically, a UE 501 may pass through a procedure to report capability supported by the UE to a serving base station 502 in a state that the UE is connected to the corresponding base station. At operation 505, the base station may deliver to the UE in a connected state a UE capability enquiry message that requests reporting of the UE capability. The message may include a request by the base station for UE capability by each radio access technology (RAT) type. The RAT type based request may include frequency band information as requested. Also, the UE capability enquiry message may request a plurality of RAT types in one RRC message container, or deliver to the UE the UE capability enquiry message including the RAT type based request several times. That is, the UE capability enquiry is repeated several times at operation 505 and the UE may construct UE capability information messages corresponding thereto, and report the constructed UE capability information message to the base station several times. Meanwhile, in the next generation mobile communication system to which the disclosure is applicable, UE capability for multi-radio-DC (MR-DC) including NR, LTE, E-UTRA-NR DC (EN-DC) may be requested. Meanwhile, the UE capability enquiry message is generally delivered during the UE establishes DC connection or after the establishment is completed, but it may also be requested in any condition when the base station requires.

At the operation 505, the UE having received the request for reporting UE capability from the base station may construct the UE capability according to RAT type and band information as requested by the base station. An example of a method by the UE of constructing UE capability in the NR system to which the disclosure is applicable will be described below.
1. If the UE may receive a list of LTE and/or NR band, as a request for UE capability, from the base station, the UE may construct a band combination (BC) for EN-DC and NR stand-alone (SA). That is, based on the band requested as FreqBandList from the base station, a candidate list of BCs for EN-DC and NR SA may be constructed. Also, the priority of the bands is determined in the sequence as described in the FreqBandList.
2. If "" flag or "" flag is set, NR SA BCs may be completely removed from the candidate list of BCs constructed above. This may occur only where the LTE base station (eNB) requests "" capability.
3. Thereafter, the UE removes fallback BCs from the candidate list of BCs constructed at the above operation 1. Here, the fallback BC corresponds to a case where the band corresponding to one SCell at minimum is removed from any super set of BCs. As the superset of BCs may already cover the fallback BC, it is possible to omit the fallback BC. This operation 3 may be also applied to MR-DC. That is, the operation 3 may be applied to LTE bands. The BCs remaining after the operation 3 are the final "candidate list of BCs".
4. The UE may select BCs suitable for the requested RAT types from the final "candidate list of BCs" and select BCs to be reported therefrom. In the operation 4, the UE may construct supportedBandCombinationList in a predetermined order. That is, the UE may construct BCs and UE capability to be reported according to the sequence of rat-Types as previously configured (nr -> eutra-nr -> eutra). Also, featureSetCombination for the constructed supportedBandCombinationList is constructed, and a list of "candidate feature set combination" from the candidate list of BCs from which a list of the fallback BCs (including capabilities at the same or lower level) is removed may be constructed. The "candidate feature set combination" includes the feature set combinations both for NR and EUTRA-NR BC and may be obtained from the feature set combination of UE-NR-Capabilities and UE-MRDC-Capabilities containers.
5. Also, if the requested rat Type is eutra-nr and have influences, featureSetCombinations may be included in the two containers of UE-MRDC Capabilities and UE-NR Capabilities. However, the feature set of NR may include only UE-NR-Capabilities.

After the UE capability is constructed, the UE may deliver a UE capability information message including the UE capability to the base station at operation 510. Based on the UE capability received from the UE, the base station may perform proper scheduling and transmission and reception management to the corresponding UE thereafter.

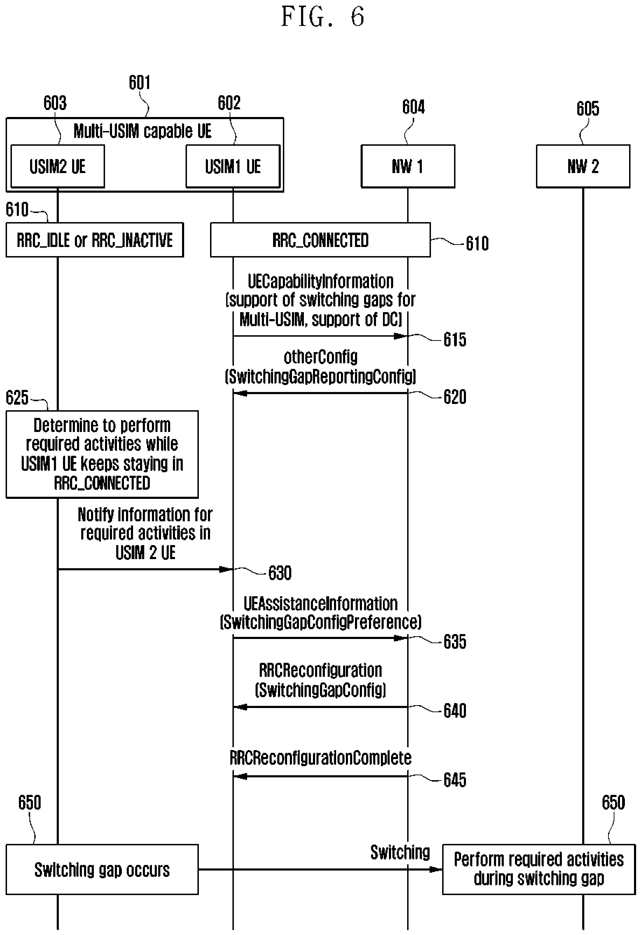

FIG. 6 is a diagram illustrating an operation in which a UE supporting a plurality of universal subscriber identity module (USIMs) (for example, Multi-USIM UE) performs operations associated with other USIMs while maintaining an RRC connected mode (RRC_CONNECTED) with a base station associated with one USIM according to an embodiment of the disclosure.

A multi-USIM UE 601 according to an embodiment of the disclosure may refer to a terminal supporting two or more USIMs. For convenience of description, the disclosure considers a dual-USIM UE supporting two USIMs, but the disclosure is not limited thereto. Meanwhile, a single-USIM UE has a characteristic of transmitting or receiving a signal (or data) to only a base station associated with one USIM at a given period of time. On the other hand, the multi-USIM (for example, dual-USIM) UE has a characteristic of transmitting or receiving a signal from a base station associated with one USIM at a given period of time or transmitting or receiving a signal from a base station associated with each USIM at the same time.

With reference to FIG. 6, the multi-USIM UE 601 may refer to a terminal in which one device supports multiple USIMs. For example, the multi-USIM UE may refer to a USIM 1 UE 602 in case of operating in USIM 1, or may refer to a USIM 2 UE 603 in case of operating in USIM 2. The base station associated with each USIM may recognize the multi-USIM UE as one terminal per USIM UE rather than recognizing the multi-USIM UE as one terminal. For example, a base station 1 604 may recognize the USIM 1 UE 602 as one terminal, and a base station 2 605 may recognize the USIM 2 UE 603 as one terminal.

Hereinafter, in the embodiments of the disclosure, for convenience of description, in case where a multi-USIM UE performs communication using USIM 1, the multi-USIM UE is referred to as a USIM 1 UE, and in case where the multi-USIM UE performs communication using USIM 2, the multi-USIM UE is referred to as a USIM 2 UE. That is, the multi-USIM UE may be either the USIM 1 UE or USIM 2 UE depending on which USIM among USIM 1 and USIM 2 is used.

In operation 610, the USIM 1 UE 602 may be in an RRC connected mode (RRC_CONNECTED) by establishing an RRC connection with the base station 1 604. On the other hand, in operation 610, the USIM 2 UE 603 may not establish an RRC connection with the base station 2 605 and thus to be in an RRC idle mode (RRC_IDLE) or RRC inactive mode (RRC_INACTIVE).

In operation 615, the USIM 1 UE 602 may transmit a UE capability information message (UECapabilityInformation) to the base station 1 604. The UE capability information message may include at least one of the following pieces of information. For reference, in the drawing, for convenience of description, it is assumed that the multi USIM UE does not support the operation of maintaining two RRC connections, but the disclosure is not limited to thereto.
- An indicator or information element indicating supporting of the multi-USIM.
- An indicator or information element indicating supporting of a procedure in which the USIM 1 UE 602 performs a switching procedure to the USIM 2 UE 603 from the base station 1 604 for leaving the RRC connected mode (support of switching procedure for leaving RRC_CONNECTED state).

In operation 620, the base station 1 604 may transmit a predetermined RRC message including configuration information (SwitchingGapReportingConfig) indicating to report the switching gap information preferred/required for the USIM 1 UE 602 to perform multi-USIM operation. For example, the predetermined RRC message may refer to an RRCReconfiguration message, an RRCResume message, or a new RRC message. Additionally, the SwitchingGapReportingConfig may be contained in otherConfig. The SwitchingGapReportingConfig may be configuration information related to a switching procedure without leaving RRC_CONNECTED state. The SwitchingGapReportingConfig may include at least one of the following.
- An indicator or information element indicating whether the USIM 1 UE 602 is allowed to transmit preferred switching gap configuration information while maintaining the RRC connected mode with the base station 1 604 (for example, SetupRelease).
- New Prohibit Timer Value
   ▪ In case where the base station 1 604 configures or sets up the new prohibit timer value for the USIM 1 UE 602, the USIM 1 UE 602 may drive a new timer with the new prohibit timer value when a procedure for transmitting preferred switching gap configuration information to the base station 1 604 is started, and may transmit a predetermined RRC message including the preferred switching gap configuration information to the base station 1 604

In operation 625, the USIM 2 UE 603 may determine whether to perform a predetermined operation in the RRC idle mode or the RRC inactive mode. The predetermined operation may be an operation in which the USIM 2 UE 603 is related to the base station 2 605, and may refer to at least one of the following.
- Operation 1: The USIM 2 UE 603 may not perform an RRC connection establishment procedure or RRC connection resume procedure with the base station 2 605, but may perform an operation of receiving a signal transmitted by the base station 2 605 or perform an internal operation of the USIM 2 UE based on the reception. For example, the following operation may be performed.
   ▪ The USIM 2 UE 603 monitors a paging channel or short message associated with the base station 2 605. For example, the USIM 2 UE 603 may monitor a paging occasion every discontinuous reception (DRX) cycle.
   ▪ The USIM 2 UE 603 performs monitoring for reception of the system information change notification associated with the base station 2 1605. For example, the USIM 2 UE 603 may monitor a paging occasion every DRX cycle.
   ▪ The USIM 2 UE 603 may perform cell selection or cell reselection evaluation procedure. As an example, the USIM 2 UE may perform cell measurement of a serving cell or neighboring cell as part of a cell selection or cell reselection evaluation procedure
   ▪ The USIM 2 UE 603 performs a procedure of selecting a public land mobile network (PLMN).
- Operation 2: The USIM 2 UE 603 may not perform an RRC connection establishment procedure or RRC connection resume procedure with the base station 2 605, but may perform transmission to or reception from the base station 2 605, for example, the following operation.
   ▪ The USIM 2 UE 603 requests on-demand system information to acquire system information from the base station 2 605 or in an on-demand scheme.
- Operation 3: The USIM 2 UE 603 in an RRC inactive mode performs an RRC connection resumption procedure with the base station 2 605, but fails to transition to an RRC connected mode. For example, the following operation may be performed.
   ▪ The USIM 2 UE 603 may receive the RAN paging message transmitted by the base station 2 605, and a UE identifier (I-RNTI) indicating the USIM 2 UE 603 is included in the received RAN paging message. However, the USIM 1 UE 602 may need to continuously perform data transmission or reception to or from the base station 1 604. In this case, the USIM 2 UE 603 may transmit, to the base station 2 605, a RRCResumeRequest/1 message containing a busy indication indicating that it cannot respond to the RAN paging message received from the base station 2 605. For reference, busy indication may be contained in resumeCause. In response thereto, the base station 2 605 may transmit an RRCReject or RRCRelease message to the USIM 2 UE 603
- Operation 4: The USIM 2 UE 603 may transition to the RRC connected mode by performing a procedure for establishing or resuming an RRC connection with the base station 2 605 (in the drawing, the corresponding operation is not considered). For example, the following operation may be performed.
   ▪ The USIM 2 UE 603 performs a registration update procedure or RAN notification area update procedure

The above-described operation may be a periodic operation, an aperiodic operation, or may refer to a one-time operation.

In operation 630, the USIM 2 UE 603 may notify the USIM 1 UE 602 of pieces of information required to perform the above-described operation in operation 625 in an RRC idle mode or RRC inactive mode. Meanwhile, the operation 630 may be implemented by the multi-USIM UE 601.

In operation 635, the USIM 1 UE 602 may transmit, to the base station 1 604, a predetermined RRC message containing configuration information (SwitchingGapConfigPreference) for one or a plurality of preferred switching gap patterns. As an example, the predetermined RRC message may refer to UEAssistanceInformation or new RRC message. Specifically, in case where at least one of the following conditions is satisfied, the USIM 1 UE 602 may transmit a predetermined RRC message including the SwitchingGapConfigPreference to the base station 1 604.
- Condition 1: A case where a predetermined RRC message including SwitchingGapConfigPreference is not transmitted after SwitchingGapReportingConfig is configured in operation 620.
- Condition 2: A case where the currently preferred SwitchingGapConfigPreference is different from the most recently transmitted SwitchingGapConfigPreference.
- Condition 3: A case where the currently preferred SwitchingGapConfigPreference is different from the currently configured SwitchingGapConfig.
- Condition 4: A case where the currently preferred SwitchingGapConfigPreference is different from the most recently transmitted SwitchingGapConfigPreference and the above-mentioned new prohibit timer is not running in operation 620.
- Condition 5: A case where the currently preferred SwitchingGapConfigPreference is different from the currently configured SwitchingGapConfig, and the above described new prohibit timer is not running in operation 620.

Meanwhile, in operation 635, the USIM 1 UE 602 may start (or restart) a new timer with the new prohibit timer value configured in operation 620, and may transmit a predetermined RRC message including SwitchingGapConfigPreference to the base station 1 604. The SwitchingGapConfigPreference may refer to configuration information different from the measurement configuration information (MeasConfig) of the above-described embodiment. Specifically, one or a plurality of SwitchingGapConfigPreferences according to an embodiment may have a difference from MeasGapConfig of the above-described embodiment as follows.
- SwitchingGapConfigPreference is switching gap configuration information which may be requested by the USIM 1 UE 602 through transmission to the base station 1 604 so that the USIM 2 UE may perform the predetermined operation described above in operation 630. SwitchingGapConfigPreference may include one or more preferred switching gap patterns depending on the required operation in operation 625.
- The units of switching gap repetition periodicity, switching gap length, and switching gap timing advance may refer to one of the units representing time. As an example, the units may be expressed in ms, in units of slots, or in units of subframes. The switching gap offset may be indicated by one of 0 to the value obtained by switching gap repetition periodicity-1.

In operation 640, the base station 1 604 may transmit, in response to operation 635, a predetermined RRC message containing one or a plurality of pieces of switching gap configuration information (SwitchingGapConfig) based on the SwitchingGapConfigPreference requested by the USIM 1 UE 602. As an example, the predetermined RRC message may refer to RRCReconfiguration, RRCResume, or new RRC message. Specifically, the base station 1 may include, in SwitchingGapConfig, permissible (or configurable) information among the received SwitchingGapConfigPreferences in operation 640, or may change (delta) some information and include the same in SwitchingGapConfig.

In operation 645, the USIM 1 UE 602 may transmit a predetermined RRC message to the base station 1 604 in response to the predetermined RRC message received in operation 640. As an example, the predetermined RRC message may refer to RRCReconfigurationComplete, RRCResumeComplete, new RRC message, or the like.

In operation 650, the USIM 1 UE 602 may determine whether one or a plurality of switching gaps occur through the SwitchingGapConfig, which is received and applied in operation 640. For example,
- In case where SwitchingGapConfig is configured to Setup:
   - In case where SwitchingGapConfig has already been set up, the USIM 1 UE may release the corresponding SwitchingGapConfig;
   - The USIM 1 UE may set up one or a plurality of switching gap patterns indicated by the SwitchingGapConfig received in operation 640. Specifically, the first subframe and SFN each having a switching gap occurring therein need to satisfy condition 1 below (SFN may be based on PCell or a cell indicated by refServCellIndicator).

### <Condition 1>

SFN mod T = FLOOR(switching gap offset/10);
subframe = switching gap offset mod 10;
with T = switching gap repetition periodicity/10 as defined in TS 38.133;

- The switching gap timing advance may be applied to a gap generated by satisfying the above conditions. That is, the UE may apply the timing advance, which is indicated by the switching gap timing advance, to the gap timing point occurring when the above condition is satisfied. As an example, the UE may start the measurement earlier by the switching gap timing advance than the gap subframe generation time point.
- The constant value "10" may be fixed to another constant value, or the base station 1 604 may configure the constant value as a specific value in operation 640, or the constant value may be configured to be a value requested by the USIM 1 UE 602 in operation 635.
- The USIM 2 UE 603 may perform a predetermined operation by the switching length from the generation of the gap subframe.
   - One or a plurality of gap patterns, having been released in SwitchingGapConfig, may be released;

In case where a switching gap is generated in operation 650, the USIM 2 UE 603 may perform at least one of the above-described operations, which are performed in operation 625, during the switching gap length from a time point at which the switching gap is generated, in operation 650. In this case, the USIM 1 UE 602 maintains the RRC connected mode with the base station 1 604.

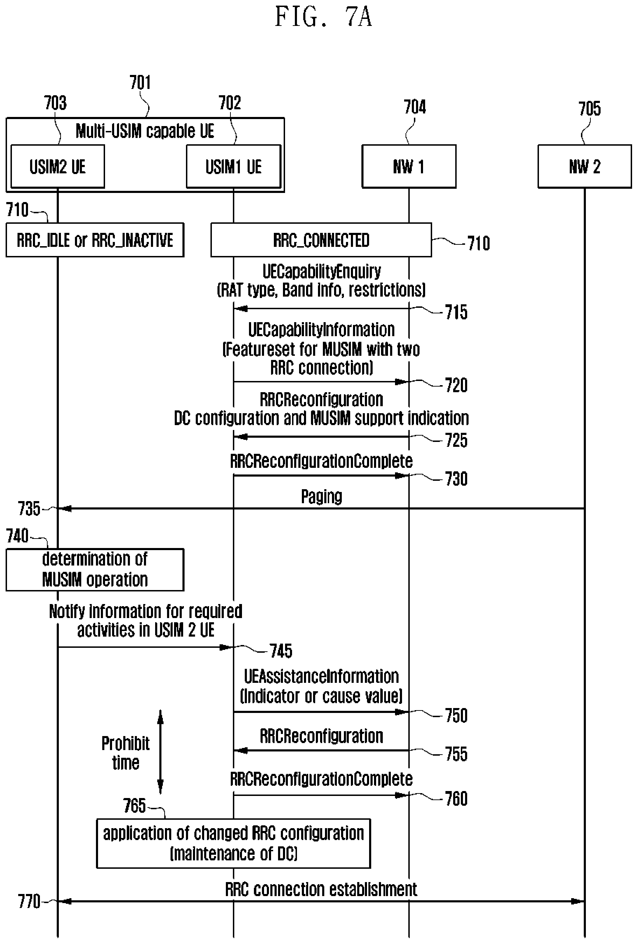

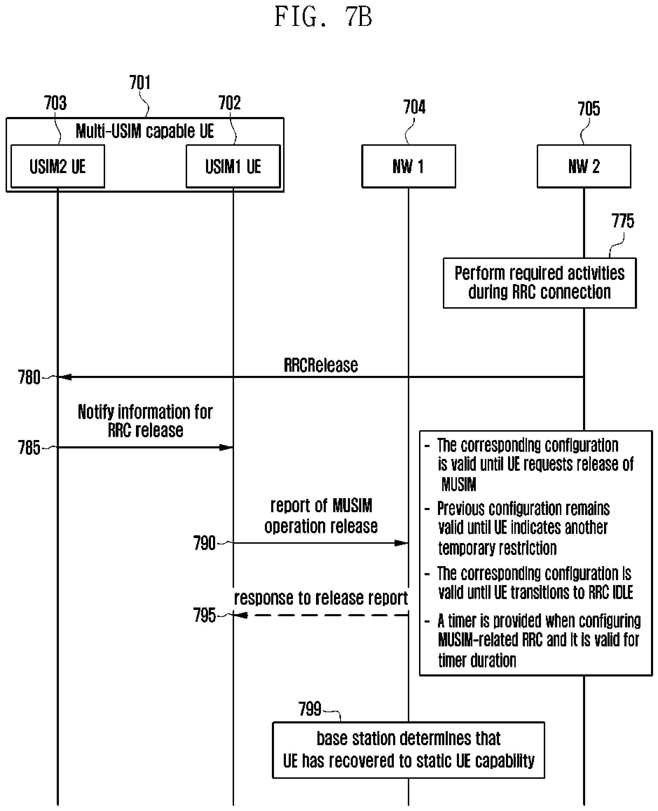

FIGS. 7A and 7B are diagrams illustrating Method 1 in which in which a UE supporting MUSIM supports DC and CA while maintaining two RRC connected states, as Embodiment 1 proposed in the disclosure.

Particularly, this embodiment is characterized in that when a UE transmits UE capability to a base station, the UE delivers a separate UE capability that maintains DC and CA, while maintaining two RRC connected states.

A multi-USIM UE 701 according to an embodiment of the disclosure may refer to a UE that supports two or more USIMs. For convenience of description, the disclosure considers a dual-USIM UE that supports two USIMs, but the disclosure is not limited thereto. Meanwhile, a single-USIM UE has a characteristic of transmitting or receiving a signal (or data) only to a base station associated with one USIM at a given period of time. In contrast, a multi-USIM (for example, dual-USIM) UE has a characteristic of transmitting or receiving a signal from a base station associated with one USIM at a given period of time, or transmitting or receiving a signal from a base station associated with each USIM at the same time.

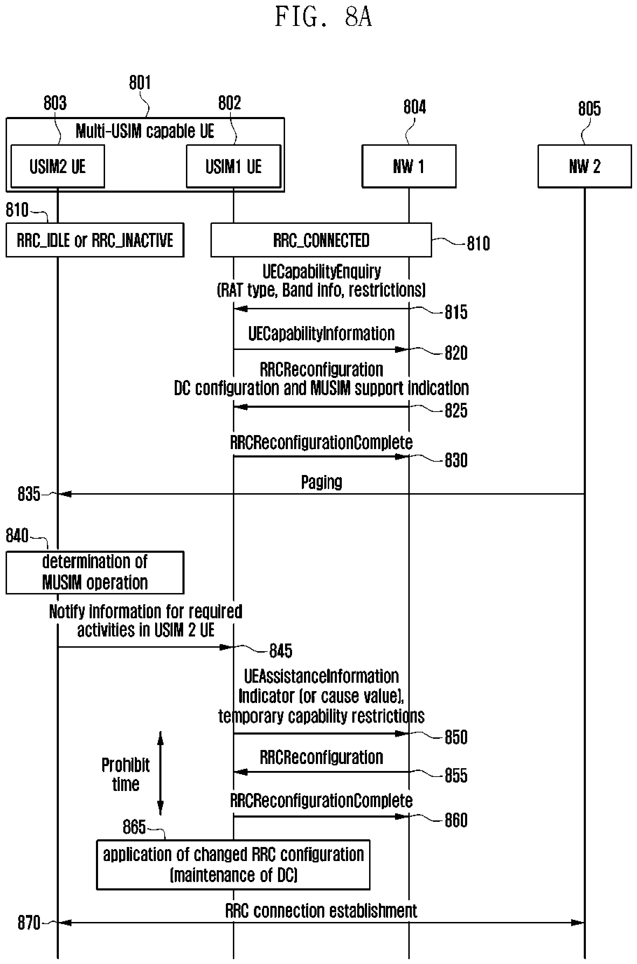

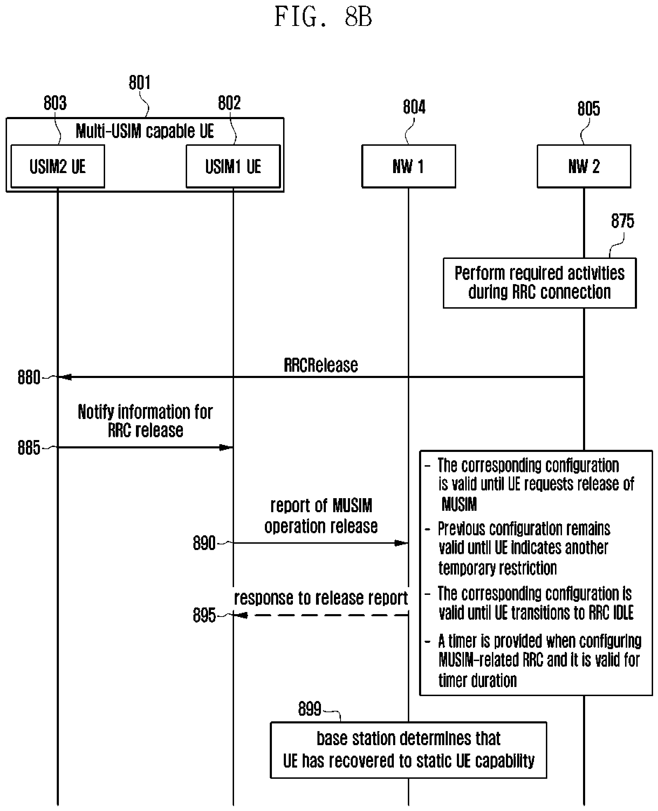

With reference to FIGS. 7A and 7B, the multi-USIM UE 701 may refer to a terminal in which one device supports a plurality of USIMs. As an example, the multi-USIM UE may refer to a USIM 1 UE 702 in case of operating in USIM 1, or may refer to a USIM 2 UE 703 in case of operating in USIM 2. The base station associated with each USIM may recognize the multi-USIM UE as one terminal per USIM UE rather than recognizing the multi-USIM UE as one terminal. For example, a base station 1704 may recognize the USIM 1 UE 702 as one terminal, and a base station 2 705 may recognize the USIM 2 UE 703 as one terminal. Hereinafter, in the embodiments of the disclosure, for convenience of description, in case where a multi-USIM UE performs communication using USIM 1, the multi-USIM UE is referred to as a USIM 1 UE, and in case where the multi-USIM UE performs communication using USIM 2, the multi-USIM UE is referred to as a USIM 2 UE. That is, the multi-USIM UE may be either the USIM 1 UE or USIM 2 UE depending on which USIM among USIM 1 and USIM 2 is used. This may be equally applied to FIG. 8.

In operation 710, the USIM 1 UE 702 may be in an RRC connected mode (RRC CONNECTED) by establishing an RRC connection with the base station 1 704. On the other hand, in operation 710, the USIM 2 UE 703 may not establish an RRC connection with the base station 2 705 and thus to be in an RRC idle mode (RRC_IDLE) or RRC inactive mode (RRC INACTIVE).

In operation 715, the base station 1 704 may request UE capability information from the USIM 1 UE 702. The corresponding UECapabilityEnquiry message may include at least one of RAT type information, band information, and filtering information applied as a restriction of UE capability.

In operation 720, the UE stores the UE capability according to the received UE capability request and delivers the stored UE capability to the base station. In operation 720, in case where the UE may perform dual connectivity (hereinafter referred to as DC) and carrier aggregation (hereinafter referred to as CA) operations while maintaining connectivity to two base stations through multi-USIM, the UE may deliver the corresponding UE capability to the base station.

This embodiment is characterized by additionally delivering UE capability of a new structure separately from UE capability report in an existing band combination supporting DC and CA. In other words, even if it is the same band combination (BC), the UE capability when operating with existing DC and CA may be different from the UE capability when performing the DC and CA operations at the corresponding band combination while maintaining a connected state with two base stations through multi-USIM. Therefore, the UE may report the UE capabilities by distinguishing them.

For example, in case where the band combination is N1N2 (NR band 1 and NR band 2), the UE capability for the corresponding UE may be indicated in the Featuresetcombination associated with the band combination. The UE capabilities when performing DC and CA operations while maintaining connectivity to two base stations through Multi-USIM may be constituted by introducing a new featuresetcombination (e.g. FeaturesetcombinationMUSIM). Intuitively, the UE has specific UE capability in the existing N1N2 band combination, but if the UE wants to be in an RRC connected state with additional network while maintaining the N1N2 band combination, the UE may have UE capability that is reduced compared to the existing UE capability.

In other words, the FeaturesetcombinationMUSIM may be a subset of Featuresetcombination or a fallback capability set. By receiving the corresponding UE capability, the base station may simultaneously find whether the UE may perform the DC and CA operations while maintaining connection to two base stations through multi-USIM, and exactly what capability the UE operates, and accordingly, the base station may support the corresponding capability.

In operation 725, base station 1 may deliver an RRC reconfiguration considering UE capability to USIM 1 UE, and at operation 725, at the same time as configuring DC or CA, the base station may indicate that DC or CA operation may be configured while maintaining connection to two base stations through multi-USIM that matches the UE capability. Meanwhile, the indication operation may be omitted and may be implicitly implemented through an RRC configuration.

In operation 730, the UE that has received the RRCReconfiguration configuration may deliver an RRCReconfigurationComplete message in response to the reception.

In operation 735, base station 2 705 may generate and deliver paging to USIM 2 UE for reasons such as downlink data generation. In other words, the RRC connection procedure may be requested to the USIM 2 UE. In operation 735 above, in addition to paging, any one of operations 1 to 4 described in operation 625 may be performed.

In operation 740, the USIM 2 UE may identify that RRC connection to base station 2 is necessary and determine an MUSIM operation.

In operation 745, the USIM 2 UE may inform the USIM 1 UE that it will attempt an RRC connection to base station 2. This may be through a standardized interface, but it may also be delivered through implementation-defined messages. Through the above procedure, the USIM 1 UE finds that the USIM 2 UE will attempt an RRC connection to base station 2, and may notify base station 1 of this and at the same time inform that changes in DC and CA configuration may be necessary due to changes in UE capability.

In operation 750, the USIM 1 UE may deliver an indicator indicating that the MUSIM operation is performed through a UEAssistanceInformation message or new uplink RRC message. Alternatively, the USIM 1 UE may deliver a cause value indicating that the MUSIM operation begins in operation 750. In operation 750, the UE may operate a prohibit timer. Meanwhile, the actual expiration value of the prohibit timer may be configured by the base station in operation 725.

In operation 755, base station 1 may determine what configuration to provide to the UE later based on the indicator received from the UE in operation 750, and may deliver RRC reconfiguration accordingly. The base station may deliver the configuration changed by reflecting FeaturesetcombinationMUSIM for the band combination that operates as requested by the UE, or may release DC and CA configurations.

In operation 760, the UE receives the RRC configuration from base station 1 and transmits an RRCReconfigurationComplete message to stop the prohibit timer in operation and apply the configuration. Meanwhile, in Embodiment 1, a case is described where DC is maintained and RRC configuration reflecting the UE capability is changed (765), but the disclosure is not limited to thereto.

In operation 770, the USIM 2 UE may perform an RRC connection procedure as a follow-up operation to the paging from base station 2 in operation 735 above.

In operation 775, the USIM 2 UE and base station 2 may transmit and receive data in an RRC connection state, and in operation 780, RRC connection release is instructed and an RRC release operation may be performed.

In operation 785, the USIM 2 UE may inform the USIM 1 UE that the RRC connection with base station 2 has been released. This is so that the USIM 1 UE may deliver the corresponding information to base station 1 and receive service changes (790).

The indication from the USIM 1 UE to base station 1 in operation 790 above may be performed through a new RRC message or may be indicated through a UEAssistanceInformation message. Alternatively, a new MAC CE may be introduced to indicate the indication.

In operation 795, base station 1, which has received the message, may deliver a response message to the UE. The response message may be a new RRC message, may be explicitly delivered as an RRCReconfiguration message, or may be delivered implicitly by changing RRC reconfiguration.

In operation 799, base station 1 determines that the UE has recovered to static UE capability (the situation has changed from a situation in which FeaturesetcombinationMUSIM is applied to a situation in which Featuresetcombination is applied), and may operate accordingly.

In addition, the UE may explicitly request release of the UE capability change as in operation 790 above, but in addition to this, a case where the base station may identify the temporary change in UE capability may be as follows, for example. Meanwhile, the following conditions may be applied simultaneously to the UE.
1. A case where the UE explicitly requests release of changed UE capability.
2. A case where the UE indicates a new temporary restriction request (UEAssistanceInformation).
3. A case where the UE transitions to an RRC IDLE or RRC INACTIVE state.
4. A case where a separate timer is provided to configure a maintenance period of the changed UE capability (FeaturesetcombinationMUSIM), and the corresponding timer expires (the corresponding timer may be included in the RRC reconfiguration configuration to be delivered to the UE. Alternatively, depending on the situation, a plurality of timers may be configured. For example, different timers may be configured when the cause value of temporary UE capability restriction is different, and different values may be configured for each UE in an RRC connection state, IDLE state, or INACITVE state). In case where the UE requests an extension of the configured timer value, the timer that the UE wants to extend may be requested through methods such as UE assistance information, new RRC message, or MAC CE.

FIGS. 8A and 8B are diagrams illustrating Method 2 in which a UE supporting MUSIM supports DC and CA while maintaining two RRC connected states, as Embodiment 2 proposed in the disclosure.

In particular, this embodiment is characterized in that when a UE delivers UE capability to a base station, the UE delivers temporarily changed UE capability to the base station in order to maintain DC and CA, in addition to a procedure for transmitting an existing UE capability, while maintaining two RRC connected states.

In operation 810, an USIM 1 UE 802 may be in an RRC connected mode (RRC CONNECTED) by establishing an RRC connection with a base station 1 804. On the other hand, in operation 810, an USIM 2 UE 803 may not establish an RRC connection with a base station 2 803 and thus to be in an RRC idle mode (RRC_IDLE) or RRC inactive mode (RRC INACTIVE).

In operation 815, the base station 1 804 may request UE capability information from the USIM 1 UE 802. The corresponding UECapabilityEnquiry message may include at least one of RAT type information, band information, and filtering information applied as a restriction of UE capability.

In operation 820, the UE stores the UE capability according to the received UE capability request and delivers the stored UE capability to the base station. In operation 820, in case where the UE may perform DC and CA operations while maintaining connectivity to two base stations through multi-USIM, the UE may deliver the corresponding UE capability to the base station. This may be a 1-bit indicator, and may be signaled and delivered for each UE or for each band and band combination. In this embodiment, unlike the above-described Embodiment 1, only an indicator is added in the procedure for delivering UE capability, and a temporary change in UE capability is requested to the base station when an actual MUSIM operation is performed.

In operation 825, base station 1 may deliver an RRC reconfiguration considering UE capability to USIM 1 UE, and at operation 825, at the same time as configuring DC or CA, the base station may indicate that DC and CA operations may be configured while maintaining connection to two base stations through multi-USIM that matches the UE capability. Meanwhile, the indication operation may be omitted and may be implicitly implemented through an RRC configuration.

In operation 830, the UE that has received the RRCReconfiguration configuration may deliver an RRCReconfigurationComplete message in response to the reception.

In operation 835, base station 2 805 may generate and deliver paging to USIM 2 UE for reasons such as downlink data generation. In other words, the RRC connection procedure may be requested to the USIM 2 UE. In operation 835 above, in addition to paging, any one of operations 1 to 4 described in operation 625 may be performed.

In operation 840, the USIM 2 UE may identify that RRC connection to base station 2 is necessary and determine MUSIM operation.

In operation 845, the USIM 2 UE may inform the USIM 1 UE that it will attempt an RRC connection to base station 2. This may be through a standardized interface, but it may also be delivered through implementation-defined messages. Through the above procedure, the USIM 1 UE finds that the USIM 2 UE will attempt an RRC connection to base station 2, and may notify base station 1 of this and at the same time inform that changes in DC and CA configuration may be necessary due to changes in UE capability.

In operation 850, the USIM 1 UE may deliver an indicator indicating that the MUSIM operation is performed through a UEAssistanceInformation message or new uplink RRC message. Alternatively, the USIM 1 UE may deliver a cause value indicating that the MUSIM operation begins in operation 850. Also, in addition to the above cause value, at least one of the band and band combination information that the UE wants to temporarily change, the physical function change of the UE (change in the number of component carriers, change in the number of MIMO layers, change in bandwidth information for each supported band and CC, change in support power, change in frequency range support, etc.), and the like may be included. In operation 850, the UE may operate a prohibit timer. The actual expiration value of the prohibit timer may be configured by the base station in operation 825.

In operation 855, base station 1 may determine what configuration to provide to the UE later based on the information requested by the UE through the UEAssistanceInformation message or new uplink RRC message in operation 850, and may deliver RRC reconfiguration accordingly. The base station may deliver the configuration changed by reflecting the request information to the band combination that operates as requested by the UE, or may release the DC and CA configurations.

In operation 860, the UE receives the RRC configuration from base station 1 and transmits an RRCReconfigurationComplete message to stop the prohibit timer in operation and apply the configuration. Meanwhile, in Embodiment 2, a case is described where DC is maintained and RRC configuration reflecting the UE capability is changed (865), but the disclosure is not limited to thereto.

In operation 870, the USIM 2 UE may perform an RRC connection procedure as a follow-up operation to the paging from base station 2 in operation 835 above

In operation 875, the USIM 2 UE and base station 2 may transmit and receive data in an RRC connection state.

In operation 880, RRC connection release is instructed and an RRC release operation may be performed.

In operation 885, the USIM 2 UE may inform the USIM 1 UE that the RRC connection with base station 2 has been released. This is so that the USIM 1 UE may deliver the corresponding information to base station 1 and receive service changes (operation 890).

The indication from the USIM 1 UE to base station 1 in operation 890 may be performed through a new RRC message or may be indicated through a UEAssistanceInformation message. In this case, not only the indicator but also information about UE capability to be re-changed may be stored and requested. Alternatively, a new MAC CE may be introduced to indicate the indication.

In operation 895, base station 1, which has received the message, may deliver a response message to the UE. The response message may be a new RRC message, may be explicitly delivered as an RRCReconfiguration message, or may be delivered implicitly by changing RRC reconfiguration.

In operation 899, base station 1 determines that the UE has recovered to static UE capability (the situation has changed from a situation to which a temporary change in UE capability is applied to a situation in which the original Featuresetcombination is applied), and may operate accordingly.

In addition, the UE may explicitly request release of the temporary UE capability change as in operation 890 above, but in addition to this, a case where the base station may identify the temporary change in UE capability may be as follows, for example. Meanwhile, the following conditions may be applied simultaneously to the UE.
1. A case where the UE explicitly requests release of temporary restriction.
2. A case where the UE previously indicates a new temporary restriction request.
3. A case where the UE transitions to an RRC IDLE or RRC INACTIVE state.
4. A case where a separate timer is provided to configure a maintenance period of the temporary UE capability restriction, and the corresponding timer expires (the corresponding timer may be included in the RRC reconfiguration configuration to be delivered to the UE. Alternatively, depending on the situation, a plurality of timers may be configured. For example, different timers may be configured when the cause value of temporary UE capability restriction is different. Alternatively, different values may be configured for each UE in an RRC connection state, IDLE state, or INACITVE state). In case where the UE requests an extension of the configured timer value, the timer that the UE wants to extend may be requested through methods such as UE assistance information, new RRC message, or MAC CE.

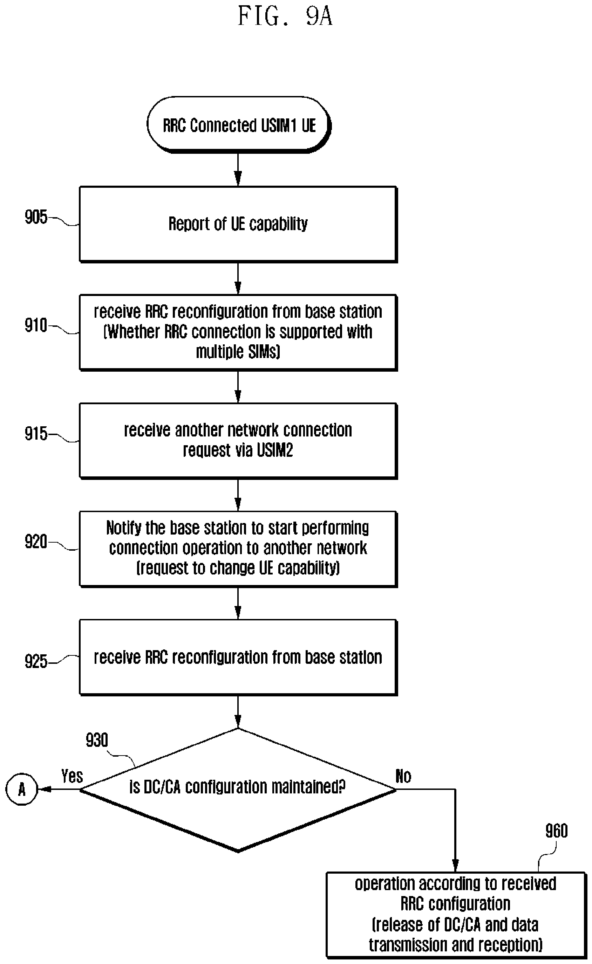

FIGS. 9A an 9B are diagrams illustrating an overall operation of a USIM 1 UE supporting MUSIM to request a temporary change in UE capability proposed in the disclosure.

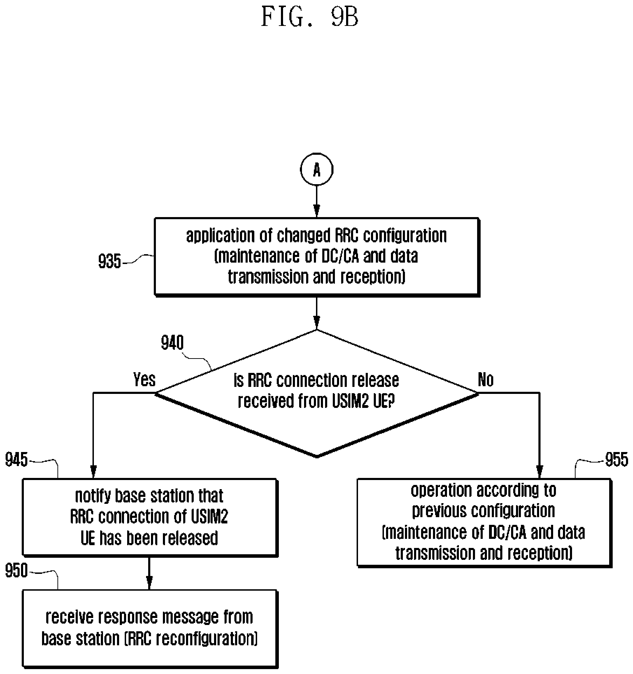

With reference to FIGS. 9A and 9B, as the USIM 1 UE in an RRC connected state may receive the UE capability report request in operation 905, the USIM1 UE may store and deliver the UE capability to the base station.

In operation 910, Embodiment 1 and Embodiment 2 are different in their features. In Embodiment 1, specific UE capability information supporting DC and CA while maintaining two RRC connections through MUSIM may be provided for each band combination. In contrast, in Embodiment 2, an indicator supporting the corresponding function may be delivered. In operation 910, RRC configuration is received from the base station, and this message may include whether the base station supports two RRC connections for a plurality of USIM UEs.

In operation 915, the USIM 1UE may recognize that it should attempt to connect to another network through the USIM 2 UE.

In operation 920, the USIM 1 UE notifies the base station connected to the USIM 1 UE that the MUSIM operation may be performed. That is, in operation 920, in Embodiment 1, the UE implicitly requests a change in UE capability through an indicator or cause value, and in Embodiment 2, specific change request information may be delivered to the base station. Meanwhile, the method for delivering the above information may be a UEAssistanceInformation message, new RRC message, or new MAC CE.

In operation 925, the USIM 1 UE receives the RRC configuration from the base station, and its operation may vary depending on whether the DC and CA configurations are maintained or included in the corresponding configuration.

In operation 930, in case where the RRC configuration includes DC and CA configurations, the USIM 1 UE may apply DC and CA operations according to the configuration in operation 935 and operate according to the changed RRC configuration.

In operation 940, the USIM 1 UE may receive information that RRC connection from the network to which the USIM 2 UE has been connected has been released.

When the above information (or indication) is received in operation 945, the USIM 1 UE may inform the base station connected to the USIM 1 UE that the RRC connection of the USIM 2 UE has been released.

In operation 950, the USIM 1 UE may receive a response message from the base station and operate accordingly. Meanwhile, the response message may be an RRC reconfiguration message or new RRC message. Alternatively, in case where the USIM 1 UE does not receive the information that the RRC connection with the network to which the USIM 2 UE has been connected has been released, the USIM 1 UE may maintain the previous configuration and transmit and receive data in operation 955.

In operation 930, in case where the DC and CA configurations are released in the RRC configuration, the UE may release DC and CA according to the configuration and transmit and receive data.

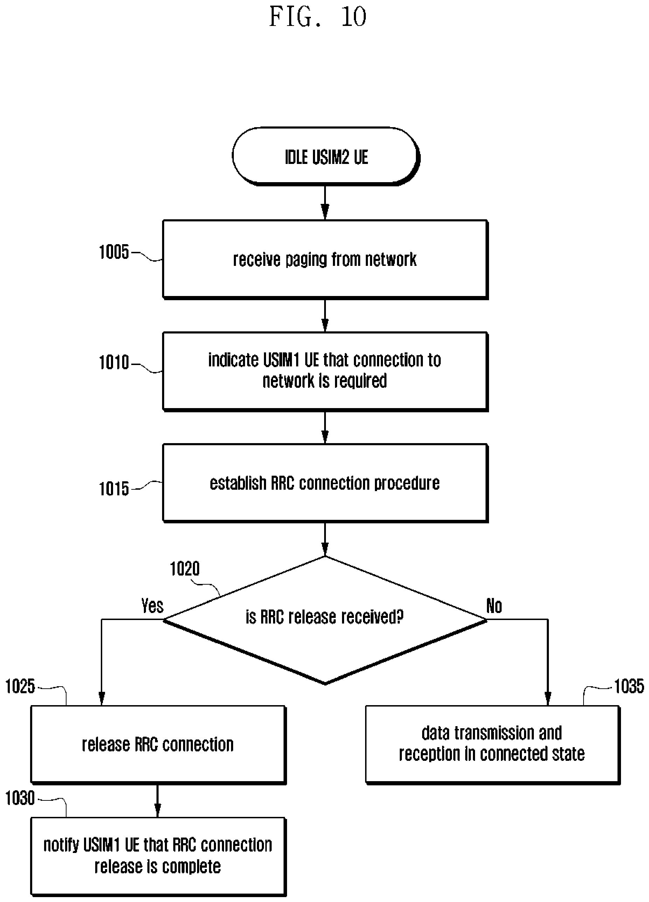

FIG. 10 is a diagram illustrating an overall operation in which an USIM2 UE in an idle or inactive state performs an MUSIM operation, proposed in the disclosure.

In operation 1005, the USIM 2 UE in the RRC IDLE state or RRC INACTIVE state receives paging from the network that has been camped on and may find that an RRC connection procedure needs to be established.

In operation 1010, the USIM 2 UE may indicate the USIM 1 UE that an MUSIM operation is required. In other words, it notifies that a connection to a new network is required.

In operation 1015, an RRC connection procedure with the corresponding network may be established after a specific period of time has passed or after receiving a confirmation message from the USIM 1 UE.

In operation 1020, the USIM 2 UE may receive an RRC release message.

In operation 1025, if an RRC release message is received, the USIM 2 UE release the RRC connection and notifies the USIM 1 UE of the release in operation 1030.

Meanwhile, in case of not receiving the RRC release, that is, in case where the RRC connection state is currently maintained with the base station, the USIM 2 UE may perform data transmission and reception in the RRC connection state in operation 1035.

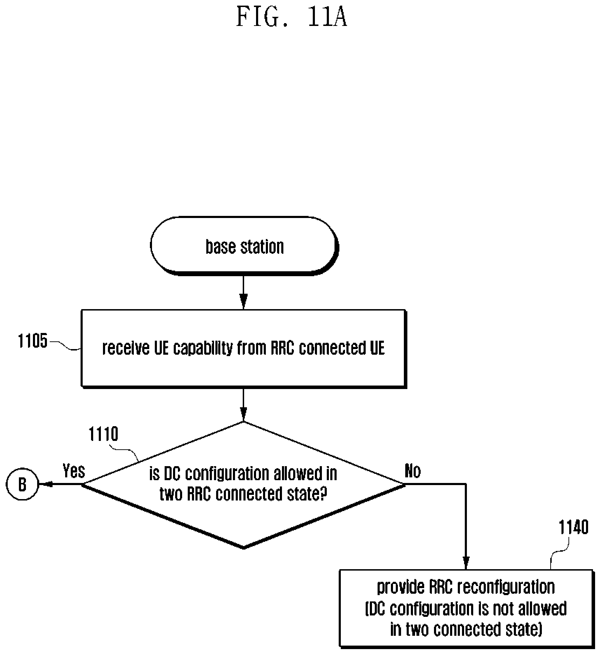

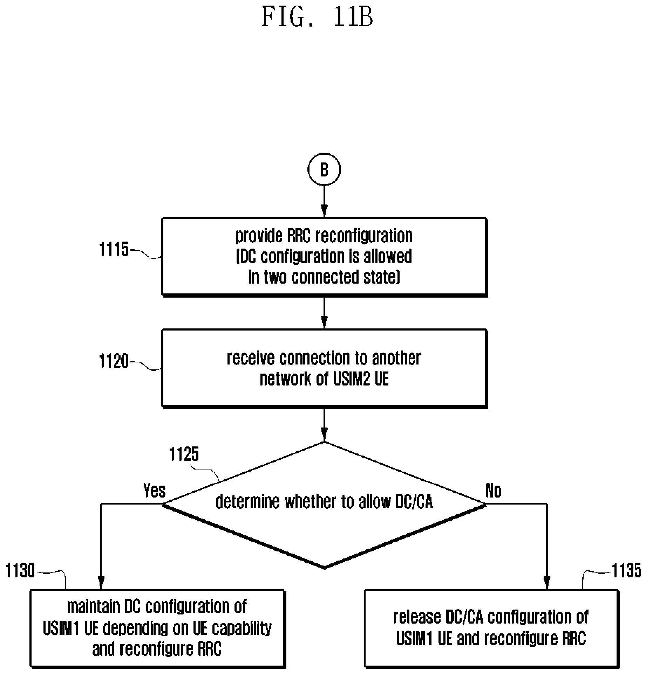

FIGS. 11A and 11B are diagrams illustrating an overall operation of a base station that support an MUSIM operation, proposed in the disclosure.

In operation 1105, a base station may receive UE capability from a UE in an RRC connected state.

In operation 1110, the base station may receive whether the corresponding UE supports an MUSIM operation through the received UE capability, whether the DC and CA operations may be performed in two RRC connected states (Embodiment 2), and specific UE capability information in the corresponding situation (Embodiment 1 or Embodiment 2).

In case where the UE may perform the DC and CA operations in two RRC connected states, the base station may deliver configurations considering the UE capability to the UE in operation 1115. For example, the configuration may be delivered to the UE through an RRC configuration message. Additionally, information that the base station supports the function of maintaining DC and CA operations in two RRC connected states may be delivered to the UE through the corresponding RRC configuration message.

In operation 1120, the base station may receive an indicator as information indicating that the connected UE and the UE operating in MUSIM will attempt a connection procedure to another network (Embodiment 1) or a temporary UE capability change request (Embodiment 2).

Then, in operation 1125, the base station may determine whether to maintain the DC and CA operations for the UE in the current RRC connected state. If it is determined to maintain the DC and CA operations, in operation 1130, the base station may maintain the DC and CA configurations of the UE according to the reported UE capability and UE request information and deliver an RRC reconfiguration. If it is determined not to maintain the DC and CA operations, the base station may release the DC and CA configurations for the UE in the connected state and deliver the RRC configuration.

In contrast, if the UE capability received in operation 1110 does not allow the DC and CA operations in two RRC connected states, the base station may deliver the RRC configuration (or reconfiguration) to the UE by preventing the DC and CA configurations from being configured at the same time during the MUSIM operation.

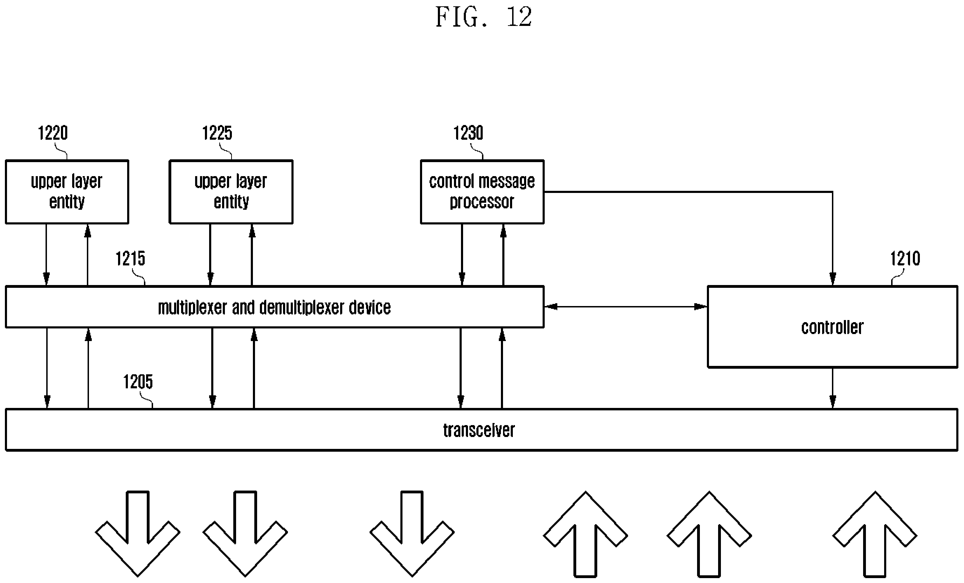

FIG. 12 is a diagram illustrating a block constitution of a UE according to an embodiment of the disclosure.

As illustrated in FIG. 12, the UE according to an embodiment of the disclosure may include a transceiver 1205, a controller 1210, a multiplexer and demultiplexer 1215, various kinds of upper layer processors 1220, 1225, and a control message processor 1230.

The transceiver 1205 receives data and a predetermined control signal through a forward channel of a serving cell and transmits data and a predetermined control signal through a backward channel. In the case where a plurality of serving cells is configured, the transceiver 1205 transmits and receives data and control signals through the plural serving cells. The multiplexer and demultiplexer 1215 serves to multiplex data generated by the upper layer processors 1220, 1225 and control message processor 1230 or demultiplex data received by the transceiver 1205 to deliver the demultiplexed data to the upper layer processors 1220, 1225 or control message processor 1230. The control message processor 1230 may take a necessary operation through transmitting and receiving a control message from a base station. Here, the control message processor may include functions of processing a control message, such as an RRC message and MAC CE, and performing a report of a CBR measurement value, and receiving an RRC message for a resource pool and the UE operation. The upper layer processors 1220, 1225 mean a DRB device, and they may be constituted for each service. The upper layer processors 1220, 1225 process the data generated in the user service, such as file transfer protocol (FPT), voice over Internet protocol (VoIP), and the like, and transfers the processed data to the multiplexer and demultiplexer 1215 or processes the data transferred from the multiplexer and demultiplexer 1215 and delivers the processed data to an upper layer service application. The controller 1210 controls the transceiver 1205 and multiplexer and demultiplexer 1215 to identify scheduling commands, for example, backward grants, received through the transceiver 1205 and to perform backward transfer thereof as proper transfer resources at a proper time. On the other hand, although it has been described that the UE is constituted with a plurality of blocks and the respective blocks perform different functions, this is merely exemplary, and the embodiment is not limited thereto. For example, the controller 1210 may perform the function performed by the demultiplexer 1215.

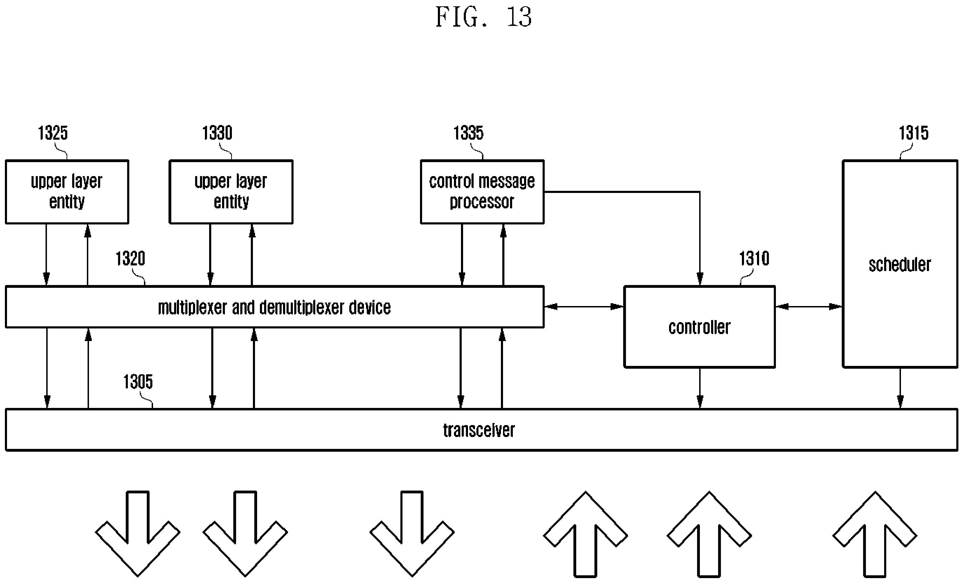

FIG. 13 is a block diagram illustrating a constitution of a base station according to an embodiment of the disclosure.

A base station of FIG. 13 may include a transceiver 1305, a controller 1310, a multiplexer and demultiplexer 1320, a control message processor 1335, various kinds of upper layer processors 1325, 1330, and a scheduler 1315.

The transceiver 1305 may transmit data and a specific control signal on a forward carrier, and may receive the data and the specific control signal on a backward carrier. In case where a plurality of carriers is configured, the transceiver 1305 transmits and receives data and a control signal through the plurality of carriers. The multiplexer and demultiplexer 1320 may serve to multiplex data generated by the upper layer processors 1325, 1330 or control message processor 1335, to demultiplex the data received through the transceiver 1305, and to transfer the multiplexed or demultiplexed data properly to the upper layer processors 1325, 1330, control message processor 1335, or controller 1310. The control message processor 1335 may receive an indication from the controller, and generate a message to be transferred to the UE and may transfer the generated message to a lower layer. The upper layer processors 1325, 1330 may be constituted for each UE and for each service, and may process data generated in a user service, such as FTP or VoIP and transfer the generated data to the multiplexer and demultiplexer 1320, or may process data transferred from the multiplexer and demultiplexer 1320 and transfer the processed data to an upper layer service application. The scheduler 1315 may allocate a transmission resource to the UE at proper time in consideration of the UE buffer state, channel state, and UE active time, may process the signal transmitted from the UE to the transceiver, or may transmit the signal to the UE.

The methods proposed in the disclosure may be executed in combination of a part or entirety of contents included in the respective embodiments without departing from the essence of the disclosure.

In the afore-described embodiments of the disclosure, elements included in the disclosure are expressed in a singular or plural form according to the embodiments. However, the singular or plural form is appropriately selected for convenience of descriptions and the disclosure is not limited thereto. As such, an element expressed in a plural form may also be configured as a single element, and an element expressed in a singular form may also be configured as plural elements.

Meanwhile, specific embodiments are described in the description of the disclosure, but it will be understood that various modifications may be made without departing the scope of the disclosure. Thus, the scope of the disclosure is not limited to the embodiments described herein and should be defined by the appended claims and their equivalents.

## Claims

1. A method of a terminal including a first USIM and a second USIM, comprising:
transmitting a UE capability information message including information on whether to support multi universal subscriber identify module (MUSIM) operation to a first base station;
receiving, from the first base station, a radio resource control (RRC) message including information on whether the first base station supports the MUSIM operation, based on the UE capability information message;
receiving a paging message from a second base station; and
performing the MUSIM operation based on the paging message,
wherein in the MUSIM operation, the first USIM maintains dual connectivity (DC) or carrier aggregation (CA) connection with the first base station, while the second USIM performs an RRC connection with the second base station.

2. The method of claim 1, wherein the information on whether to support the MUSIM operation includes information on the UE capability for each band combination in case of performing the MUSIM operation.

3. The method of claim 2, further comprising transmitting a terminal support information message including information on whether to perform the MUSIM operation to the base station,
wherein the information on whether the MUSIM operation is performed includes an indicator indicating that at least one of the MUSIM operation is performed and a cause value indicating that the MUSIM operation is started.

4. The method of claim 1, wherein the UE capability information message includes an indicator regarding whether to support the MUSIM.

5. The method of claim 4, further comprising transmitting a terminal support information message including information on whether to perform the MUSIM operation to the base station,
wherein the information on whether to perform the MUSIM operation includes band, band combination information, and information on change in physical function of the terminal.

6. A method of a first base station supporting multi universal subscribe identify module (MUSIM) operation in a wireless communication system, comprising:
receiving, from a terminal, a UE capability information message including information on whether to support the MUSIM operation of the terminal;
generating a radio resource control (RRC) message including information on whether the first base station supports the MUSIM operation, based on the UE capability information message; and
transmitting the RRC message,
wherein the terminal includes a first USIM and a second USIM,
in the MUSIM operation, the first USIM maintains dual connectivity (DC) or carrier aggregation (CA) connection with the first base station, while the second USIM performs an RRC connection with a second base station.

7. The method of claim 6, wherein the information on whether to support the MUSIM operation further includes either information on the UE capability for each band combination or an indicator regarding whether to support the MUSIM, in case of performing the MUSIM operation.

8. The method of claim 7, further comprising receiving, from the terminal, a terminal support information message including information on whether to perform the MUSIM operation,
wherein the information on whether to perform the MUSIM operation includes an indicator indicating that at least one of the MUSIM operation is performed, a cause value indicating that the MUSIM operation is started, band, band combination information, and information on change in physical function of the terminal.

9. A terminal comprising a first USIM and a second USIM, comprising:
a transceiver that transmits and receives a signal; and
a controller,
wherein the controller controls to transmit a UE capability information message including information on whether to support multi universal subscriber identify module (MUSIM) operation to a first base station, receive, from the first base station, a radio resource control (RRC) message including information on whether the first base station supports the MUSIM operation, based on the UE capability information message, receive a paging message from a second base station, and perform the MUSIM operation based on the paging message,
wherein in the MUSIM operation, the first USIM maintains dual connectivity (DC) or carrier aggregation (CA) connection with the first base station, while the second USIM performs an RRC connection with the second base station.

10. The terminal of claim 9, wherein the information on whether to support the MUSIM operation includes information on the UE capability for each band combination in case of performing the MUSIM operation.

11. The terminal of claim 10, wherein the controller controls to transmit a terminal support information message including information on whether to perform the MUSIM operation to the base station,
wherein the information on whether the MUSIM operation is performed includes an indicator indicating that at least one of the MUSIM operation is performed and a cause value indicating that the MUSIM operation is started.

12. The terminal of claim 9, wherein the controller controls to transmit a terminal support information message including information on whether to perform the MUSIM operation to the base station,
the UE capability information message includes an indicator regarding whether to support the MUSIM.
the information on whether to perform the MUSIM operation includes band, band combination information, and information on change in physical function of the terminal.

13. A first base station supporting multi universal subscribe identify module (MUSIM) operation in a wireless communication system, comprising:
a transceiver that transmits and receives a signal; and
a controller,
wherein the controller controls to receive, from a terminal, a UE capability information message including information on whether to support the MUSIM operation of the terminal, generate a radio resource control (RRC) message including information on whether the first base station supports the MUSIM operation, based on the UE capability information message, and transmit the RRC message,
wherein the terminal includes a first USIM and a second USIM,
in the MUSIM operation, the first USIM maintains dual connectivity (DC) or carrier aggregation (CA) connection with the first base station, while the second USIM performs an RRC connection with a second base station.

14. The first base station of claim 13, wherein the information on whether to support the MUSIM operation further includes either information on the UE capability for each band combination or an indicator regarding whether to support the MUSIM, in case of performing the MUSIM operation.

15. The first base station of claim 13, wherein the controller controls to receive, from the terminal, a terminal support information message including information on whether to perform the MUSIM operation,
wherein the information on whether to perform the MUSIM operation includes an indicator indicating that at least one of the MUSIM operation is performed, a cause value indicating that the MUSIM operation is started, band, band combination information, and information on change in physical function of the terminal.
